# EUROPÄISCHE PATENTSCHRIFT

(11) **EP 2 234 905 B1**
(45) Veröffentlichungstag und Bekanntmachung des Hinweises auf die Patenterteilung: **14.03.2012**
(21) Anmeldenummer: 09701336.1
(22) Anmeldetag: 09.01.2009
(51) Int. Cl.: B65G 1/04

(54) **VERFAHREN UND TRANSPORTVORRICHTUNG ZUM POSITIONIEREN VON LADEHILFSMITTELN VOR DEREN ÜBERGABE IN EIN REGALFACH**
METHOD AND TRANSPORT DEVICE FOR POSITIONING LOADING AIDS PRIOR TO THE TRANSFER THEREOF INTO A SHELF
PROCÉDÉ ET DISPOSITIF DE TRANSPORT POUR POSITIONNER DES MOYENS DE CHARGEMENT AVANT LEUR TRANSFERT DANS UN COMPARTIMENT DE RAYONNAGE

(30) Priorität: 11.01.2008 AT 432008
(43) Veröffentlichungstag der Anmeldung: 06.10.2010
(73) Patentinhaber: TGW Mechanics GmbH, 4600 Wels (AT)
(72) Erfinder: WOLKERSTORFER, Christoph, A-4600 Wels (AT)
(74) Vertreter: Burger, Hannes
(86) Internationale Anmeldenummer: PCT/AT2009/000006
(87) Internationale Veröffentlichungsnummer: WO 2009/086578

(56) Entgegenhaltungen:
- EP-A- 0 733 563
- EP-A- 1 772 400
- US-A1- 2005 095 095

## Beschreibung

Die Erfindung betrifft ein Verfahren zum Positionieren von Ladehilfsmitteln vor deren Übergabe in ein Regalfach mittels einer Transportvorrichtung und die Transportvorrichtung zur Durchführung des Verfahrens, wie in den Oberbegriffen der Ansprüche 1 und 5 beschrieben.

Die aus der EP 0 733 563 A1 bekannte Transportvorrichtung zum Ein- und Auslagern von Ladehilfsmitteln in ein bzw. aus einem Regalfach, umfasst in Übergaberichtung der Ladehilfsmittel eine erste Anschlagvornchtung und zweite Anschlagvorrichtung sowie zwischen diesen dritte Anschlagvorrichtungen, wobei die dritten Anschlagvorrichtungen in einen vorhandenen Abstandsspalt zwischen (kleinen) Ladehilfsmittel verstellt oder von in Übergaberichtung parallel verlaufenden Seitenwänden eines (großen) Ladehilfsmittels entgegen der Wirkung der Schwerkraft nach oben seitlich wegbewegt werden. EP0 733 563 A1 offenbart eine Transportvorrichtung gemäß dem Oberbegriff des Anspruchs 5.

Die EP 0 647 575 B 1 offenbart eine Transportvorrichtung zum Ein- und Auslagern von Ladehilfsmitteln in ein bzw. aus einem Regalfach, die zumindest einen Teleskoparm bestehend aus einem Tragrahmen und einem daran verschiebbar gelagerten Schlitten umfasst. Der Schlitten ist an den Enden mit zwischen einer Ausgangsstellung und einer Betätigungsstellung verschwenkbaren Anschlagvorrichtungen versehen, die zumindest soweit voneinander beabstandet sind, dass zwischen diesen ein Ladehilfsmittel aufgenommen werden kann. Soll ein Ladehilfsmittel in das Regallager eingelagert werden, so wird zumindest die an dem, dem Regalsystem gegenüberliegenden Ende gelagerte Anschlagvorrichtung hinter die Seitenwand des Ladehilfsmittels verschwenkt und das Ladehilfsmittel auf ein Regalfach abgeschoben. Beim Auslagern wird der Teleskoparm in das Regalfach ausgefahren und danach die an dem, dem Regallager zugewandten Ende gelagerten Anschlagvorrichtung hinter die Seitenwand des Ladehilfsmittels verschwenkt und vom Regalfach abgeschoben. Die Lastaufnahmevorrichtung ist nur dazu geeignet, ein Regallager mit einfach-tiefer Regalreihe zu bedienen.

Bei den aus der US 7,128,521 B2 und EP 1 772 400 A1 bekannten Transportvorrich tungen werden zwei hintereinander angeordnete Ladehilfsmittel von an Teleskoparmen schwenkbar gelagerten Anschlagvorrichtungen einzeln hintergriffen und in das Regallager eingelagert oder aus dem Regallager ausgelagert.

Aus der EP 0 775 665 B 1 ist eine Transportvorrichtung in Form eines Teleskoptisches bekannt, bei dem der äußere Teleskopschlitten bis oberhalb eines ein- oder auszulagernden Ladehilfsmittels verfährt und Anschlagpaare jeweils hinter das jeweilige Ende des Ladehilfsmittels gegenläufig verschwenkt werden.

Die in der DE 203 03 376 U1 beschriebene Transportvorrichtung zum Ein- und Auslagern von Ladehilfsmitteln, umfasst eine Greifvorrichtung, welche an die Seitenwände des ein- und auszulagernden Ladehilfsmittel kraftschlüssig oder beispielsweise auch mittels Saugkraft an das Ladehilfsmittel angelegt wird. Dadurch kann vermieden werden, dass die Greifvorrichtung beim Auslagern eines Ladehilfsmittels bis an die Rückwand des Regalfaches ausfahren muss, um die hintere Seitenwand des Ladehilfsmittels formschlüssig zu umgreifen.

Die aus der DE 44 22 240 A1 bekannte Lastaufnahmevorrichtung umfasst parallel angeordnete Teleskoparme mit jeweils einem in horizontaler Richtung nach beiden Seiten ausziehbaren Schlitten, die mit Anschlagvorrichtungen versehen sind. Die Teleskoparme sind in Richtung einer Regalgasse (X-Richfung) aufeinander zu und voneinander , weg bewegbar. Auf der Plattform zwischen den Teleskoparmen ist ein Endlosförderer angeordnet. Zum Einlagern einer Palette, wird diese vorerst mittels des Endlosförderers soweit verschoben, dass die Anschlagvorrichtungen durch die Zustellbewegung der Teleskoparme in X-Richtung in die Palette formschlüssig eingreifen können. Durch Ausfahren der Schlitten bei gleichzeitigem Antrieb des Endlosförderers wird die Palette an einen gassennahen oder gassenfernen Abstellplatz in einem Regalfach verschoben. Das Ergreifen der Palette erfolgt seitlich entweder an den vorderen oder mittleren Klötzen der Palette. Beim Auslagern einer Palette aus dem Regalfach werden vorerst die Anschlagvorrichtungen in X-Richtung verstellt und dabei die Klötze der Palette von den Anschlagvorrichtungen formschlüssig hintergriffen und durch Einziehen der Schlitten die Palette auf die Fördereinheit geschoben.

Aufgabe der Erfindung ist es ein Verfahren und eine Transportvorrichtung zum Positionieren von Ladehilfsmitteln vor deren Übergabe in ein Regalsystem mit mehreren hintereinander liegenden Abstellplätzen zu schaffen, mit dem bzw. der sich die Betriebsweise in einem Lagersystem vereinfachen lässt.

Die Aufgabe der Erfindung wird durch die Maßnahmen und Merkmale in den Ansprüchen 1 und 5 gelöst. Von Vorteil ist, dass die dicht aneinander stoßenden Ladehilfsmittel über eine konstruktiv einfache Vereinzelungsvorrichtung noch vor ihrer Übergabe an ein Regalfach, insbesondere während der Zustellbewegung der Fördereinheit zu dem Regalfach, auf der Fördereinheit auf gegenseitigen Abstand vereinzelt werden und damit sichergestellt wird, dass die Anschlagvorrichtungen ohne Kollisionen vor und hinter das entsprechende Ladehilfsmittel verstellt werden können. Somit können die Ladehilfsmittel im Regalfach in Übergaberichtung um einen Abstandsspalt hintereinander abgestellt werden, selbst wenn die Ladehilfsmittel auf der Fördereinheit hinter der an der Einlagerseite angeordneten Anschlagvorrichtung dicht an dicht aufgestaut werden. Somit können die Vorteile der sich in der Praxis bereits bestens bewährten Transportvorrichtung mit Anschlagvorrichtungen weiterhin genutzt werden und Ladehilfsmittel vereinzelt oder gleichzeitig mehrere Ladehilfsmittel ein- und ausgelagert werden.

Gemäß den Maßnahmen nach den Ansprüchen 2 und 4 werden die einzulagernden Ladehilfsmittel in eine definierte Bereitstellungslage verbracht und anschließend auf die Abstellplätze in exakter Ausrichtung gefördert.

Von Vorteil ist auch die Maßnahme nach Anspruch 3, wonach mehr als zwei Ladehilfsmittel vor deren Übergabe in ein Regalfach positioniert werden.

Die Ausgestaltung nach Anspruch 6 ist von Vorteil, da die Vereinzelungsvorrichtung in dem ohnehin vorhandenen Freiraum unterhalb der Förderebene untergebracht ist und sich dadurch ein sehr kompakter Aufbau der Transportvorrichtung ergibt.

Nach einer Weiterbildung_gemäß Anspruch 7 ist zumindest einer der ohnehin für die Ein- und Auslagerung erforderlichen Teleskoparme mit der Anschlagvorrichtung äusgestattet und nach Bedarf aktivierbar, um den Ein- und Auslagervorgang von Ladehilfsmitteln in ein Regalfach bzw. aus dem Regalfach vornehmen zu können.

Von Vorteil ist auch die Ausgestaltung nach Anspruch 8, da einerseits Ladehilfsmittel unterschiedlicher Abmessungen oder Lageausrichtung zwischen den Teleskoparmen gefördert und andererseits die Ladehilfsmittel vor ihrer Übergabe auf der Plattform ausgerichtet werden können.

Schließlich ist auch die Ausgestaltung nach Anspruch 9 vorteilhaft, da mehrere Ladehilfsmittel über nur eine Fördervorrichtung entlang dem Bewegungsweg zwischen den Teleskoparmen gefördert und über eine einfache Vereinzelungsvorrichtung auf Abstand vereinzelt werden, ohne das es hierfür erforderlich ist, je Ladehilfsmittel eine eigenständige Fördervorrichtung vorzusehen, was nicht nur einen komplexen Aufbau der Transportvorrichtung mit sich bringt, sondern eine entsprechend hohe Anzahl an Antriebsmotoren für die Fördervorrichtungen erfordert, eine aufwendige Steuerung sowie einen hohen Energieverbrauch bedingt. Durch die erfindungsgemäße Ausbildung bzw. Verfahrensmaßnahme wird eine kompakt aufgebaute Transportvorrichtung geschaffen, die zudem kostengünstig hergestellt werden kann und eine zuverlässige Betriebsweise sowie eine flexible bzw. bedarfsgerechte Leistungsanpassung erlaubt. Zudem kann die Umschlagleistung im Lagersystem gegenüber den aus dem Stand der Technik bekannten Lagersystemen wesentlich erhöht werden.

Zum besseren Verständnis der Erfindung wird diese anhand der nachfolgenden Figuren näher erläutert.

Es zeigen jeweils in stark schematisch vereinfachter Darstellung:
- Fig. 1 a-g: eine erste Ausführung der Transportvorrichtung und des Positioniervorganges von Ladehilfsmitteln auf der Plattform einer Fördereinheit, in mehreren zeitlich aufeinander folgenden Verfahrensschritten und in stark vereinfachter Darstellung;
- Fig. 1h: schematisch den Einlagervorgang von Ladehilfsmitteln von einer Plattform in ein Regalfach;
- Fig. 2a: die erfindungsgemäße Transportvorrichtung mit einer in ihrer Öffnungsstellung befindlichen Ausfahreinheit, in Stirnansicht und vereinfachter Darstellung;
- Fig. 2b: die erfindungsgemäße Transportvorrichtung mit der in ihrer Schließstellung befindlichen Ausfahreinheit, in Stirnansicht und vereinfachter Darstellung;
- Fig. 3: einen Teleskoparm der Ausfahreinheit in Stirnansicht, teilweise geschnitten und in vereinfachter Darstellung;
- Fig. 4: den Teleskoparm nach Fig. 3 in Seitenansicht und vereinfachter Darstellung;
- Fig. 5a-f: eine weitere Ausführung der Transportvorrichtung und des Positioniervorganges von Ladehilfsmitteln auf der Plattform einer Fördereinheit, in mehreren zeitlich aufeinander folgenden Verfahrensschritten und in stark vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

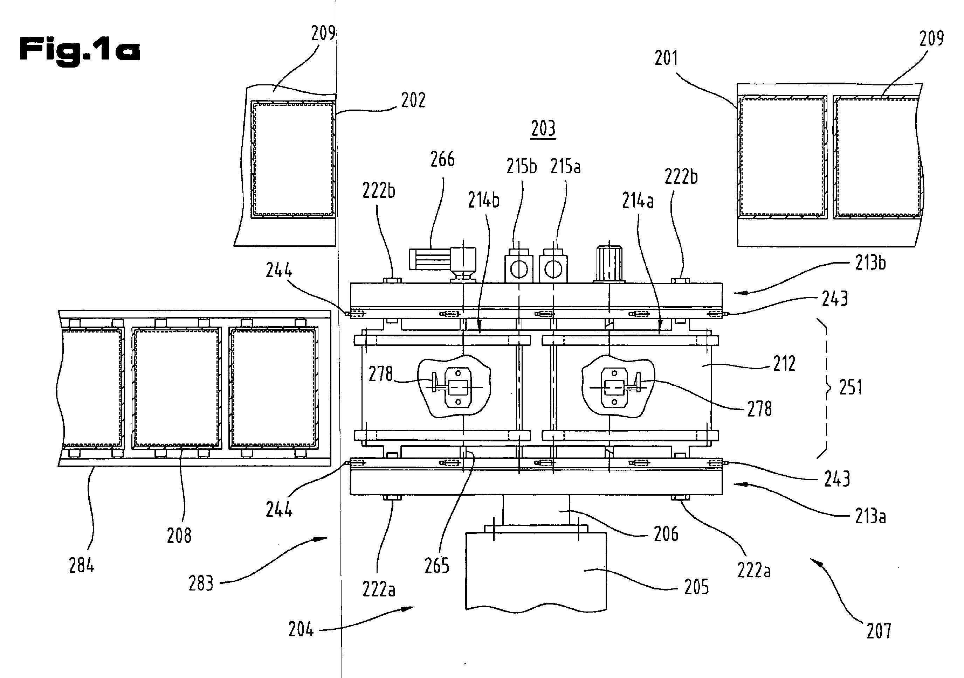

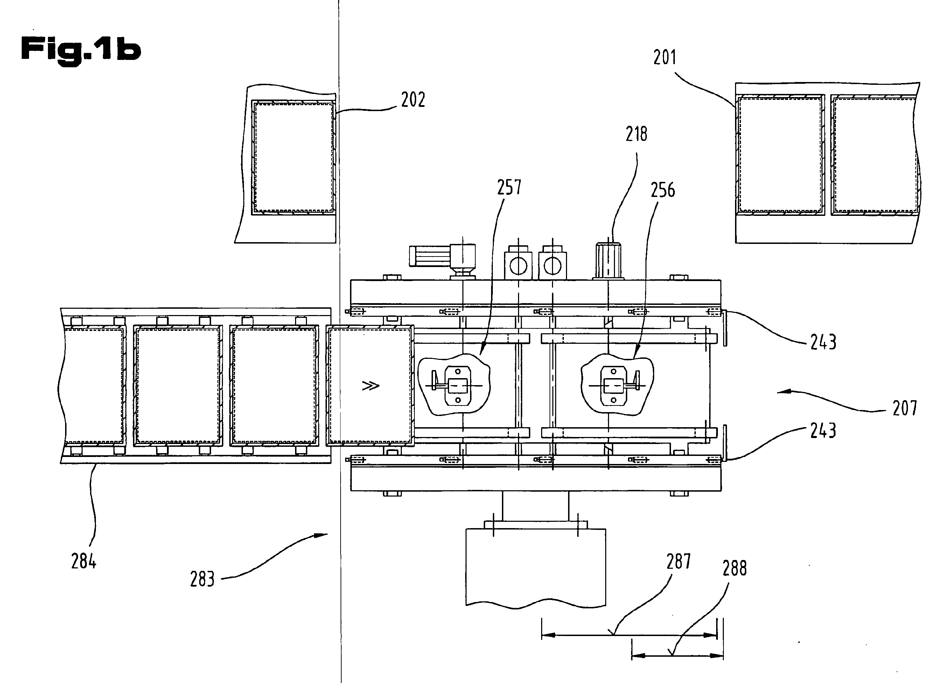

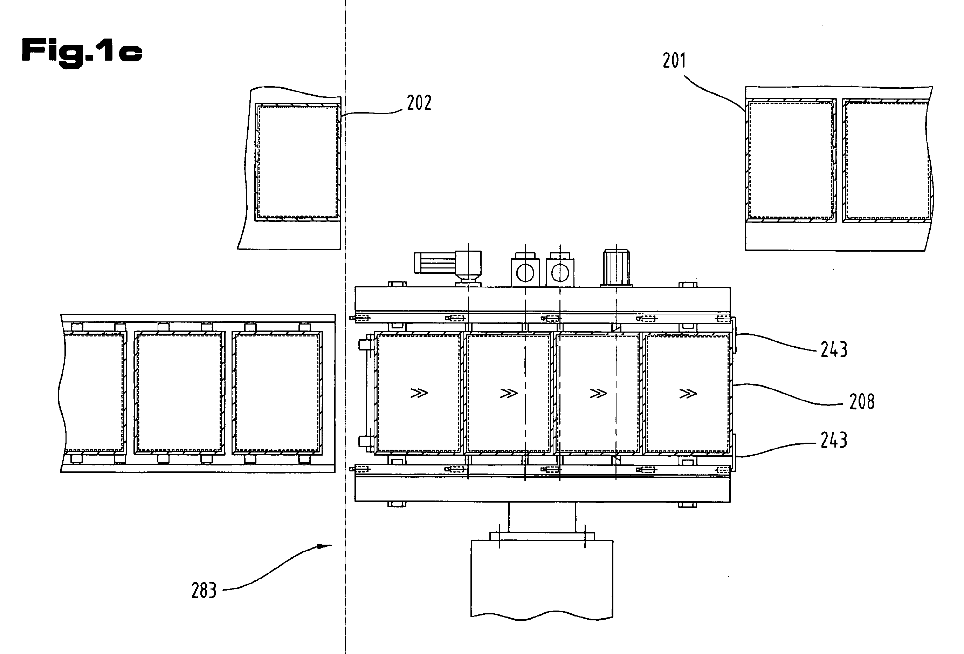

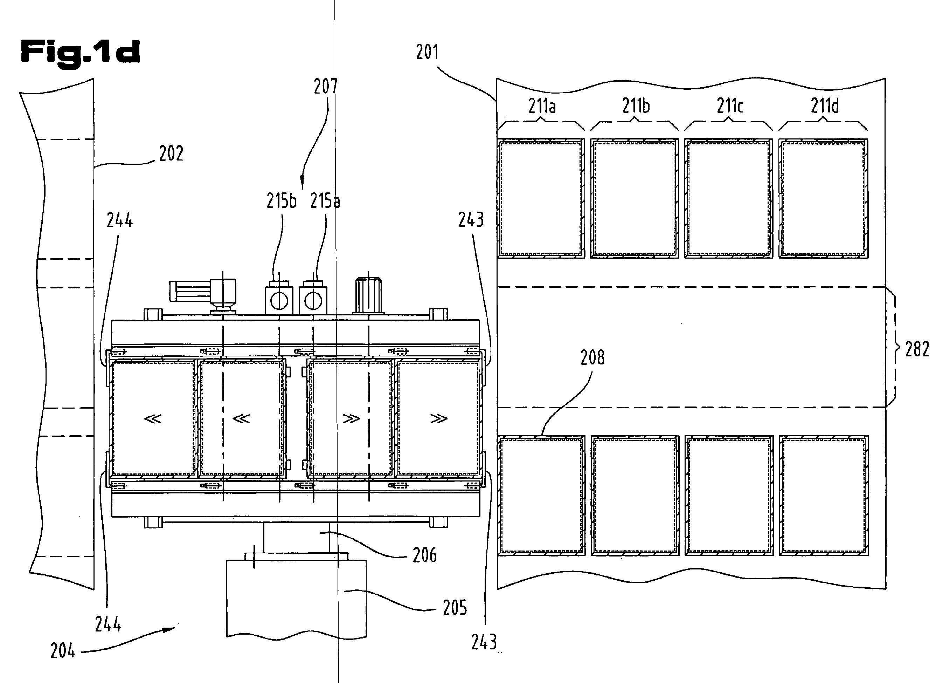

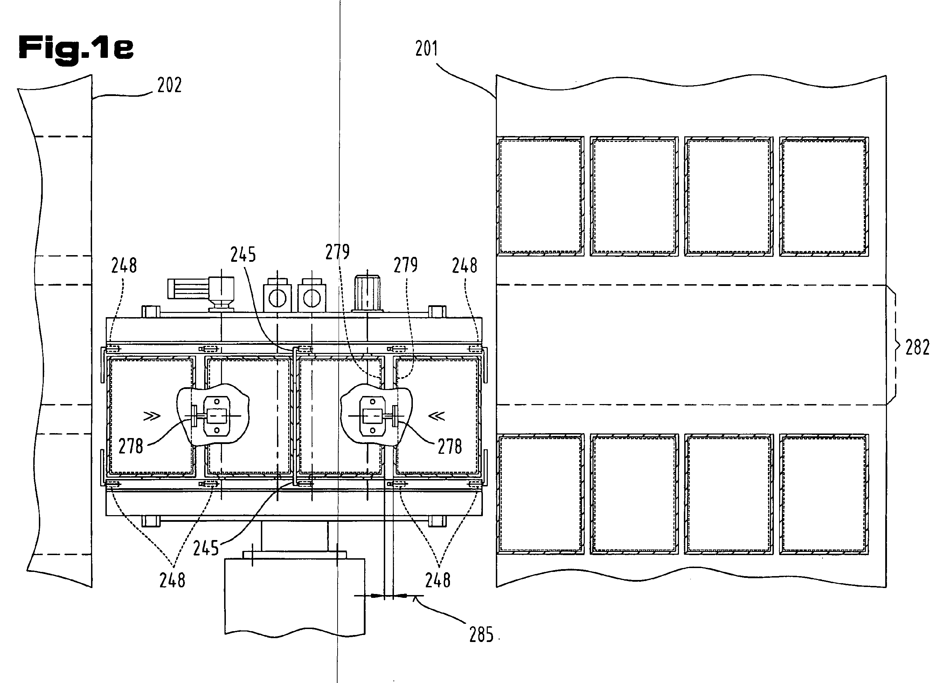

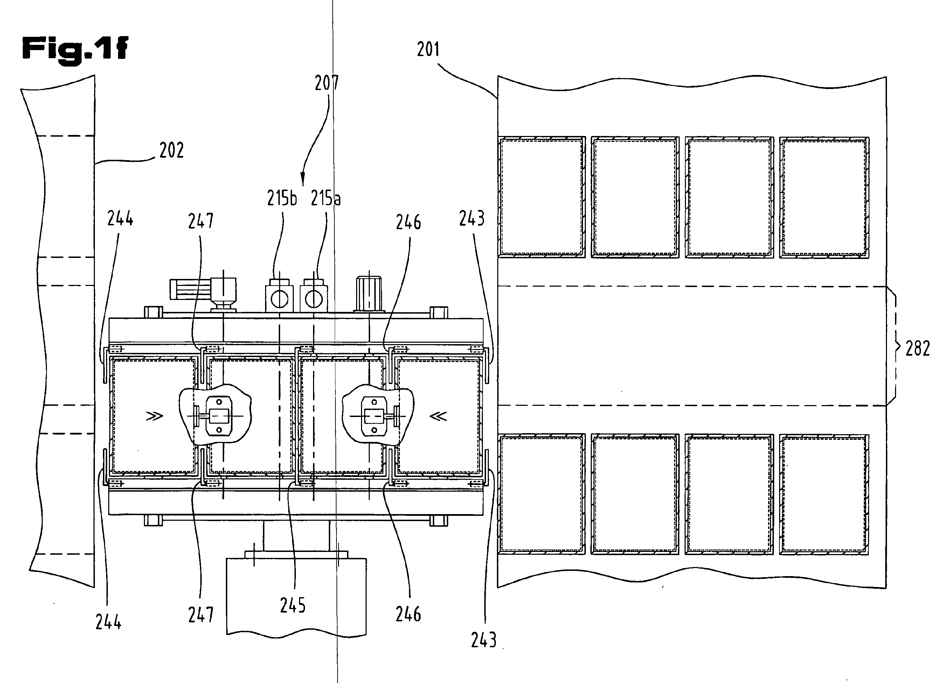

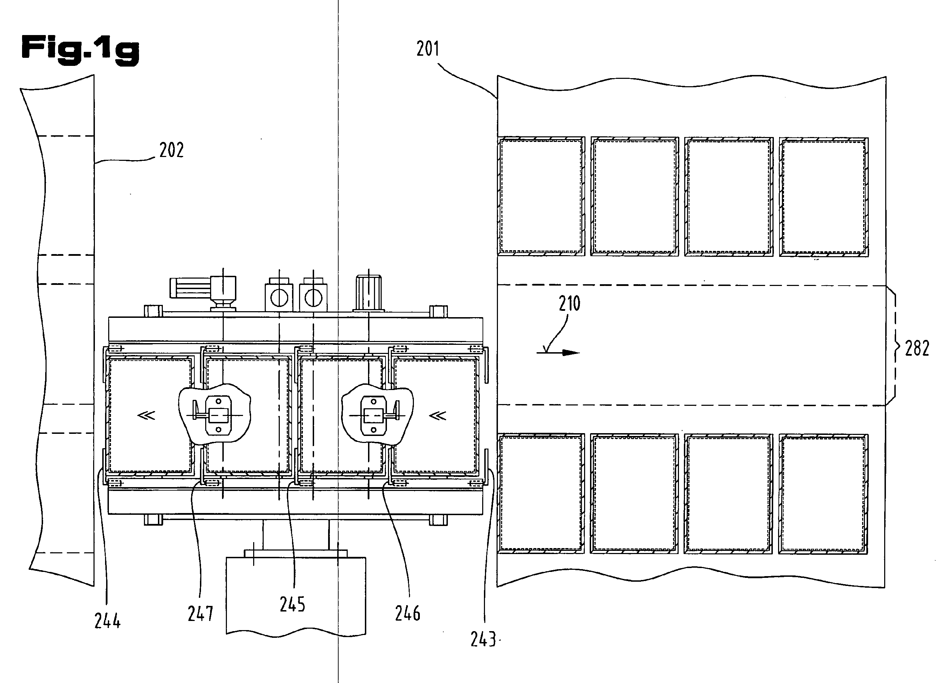

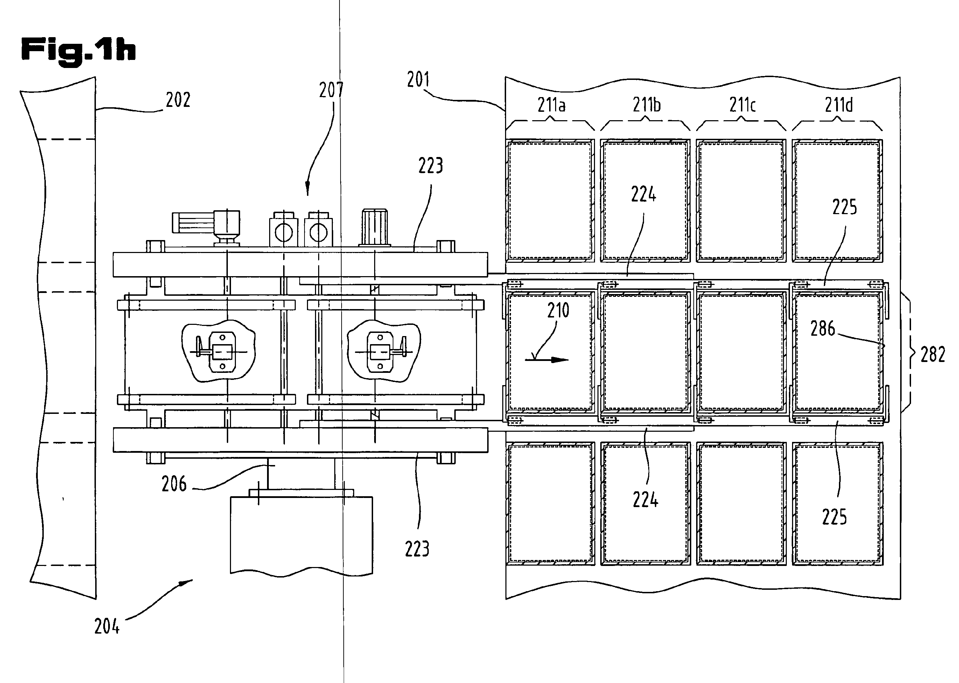

In den gemeinsam beschriebenen Figuren 1 bis 4 ist ein Lagersystem gezeigt, das spiegelbildlich mit Abstand gegenüberslehende Regalsysteme 201, 202 aufweist. Durch den Abstand zwischen den Regalsystemen 201, 202 ist im Lagersystem eine Gasse 203 freigehalten, in welcher eine Fördereinheit 204 angeordnet ist. Die Fördereinheit 204 ist beispielsweise durch ein auf Schienen entlang der Gasse 203 verfahrbares Regalbediengerät gebildet und umfasst einen an einer Fahreinheit (nicht dargestellt) befestigten, lotrechten Mast 205 und eine entlang diesem mittels eines Hubantriebes (nicht dargestellt) vertikal verstellbare Plattform 206 sowie eine auf dieser angeordnete Transportvorrichtung 207 zum Ein- und/oder Auslagern eines einzelnen oder gleichzeitig mehreren Ladehilfsmitteln 208 in ein bzw. aus einem Regalfach 209 des Regalsystems 201, 202. Die Ladehilfsmittel 208, beispielsweise Tablare, Behälter aus Karton oder Kunststoff, sind normalerweise mit Nutzwaren gefüllt, können aber auch leer sein.

Die Regalsysteme 201, 202 sind nach dieser Ausführung durch Fachbodenregale gebildet, die gegenüber den aus dem Stand der Technik bekannten Winkelregale kostengünstiger sind und mehrere mit Abstand übereinander angeordnete Regalfächer 209 mit jeweils in Übergaberichtung 210 in mehreren Reihen hintereinander angeordneten Abstellplätzen 211a bis 211 d umfasst. Nach gezeigtem Ausführungsbeispiel sind die Regalsysteme 201, 202 dafür ausgebildet, dass in einem Regalfach 209 in Übergaberichtung 210 hintereinander vier Ladehilfsmittel 208 mit den Abmessungen 300 mm x 400 mm abstellbar sind. Die Transportvorrichtung 207 kann ebenso vier Ladehilfsmittel 208 mit den Abmessungen 300 mm x 400 mm im Quertransport hintereinander aufnehmen.

Die zwischen den Regalsystemen 201, 202 vor ein vom Rechnersystem festgelegten Regalfach 209 verstellbare Transportvorrichtung 207 umfasst eine Tragplatte 212, auf der eine, parallel angeordnete Teleskoparme 213a, 213b aufweisende Ausfahreinheit und zwischen diesen in Übergaberichtung 210 hintereinander angeordnete Fördervorrichtungen 214a, 214b gelagert sind. Die Fördervorrichtungen 214a, 214b sind mit unabhängig voneinander ansteuerbaren Antriebsmotoren 215a, 215b gekoppelt, die ihrerseits an das Rechnersystem angeschlossen sind. Vorzugsweise werden als Fördervorrichtungen 214a, 214b Zweispurförderer, insbesondere Gurtförderer eingesetzt. Andererseits können die Fördervorrichtungen 214a, 214b auch durch einen Rollenförderer, Bandförderer und dgl. gebildet werden.

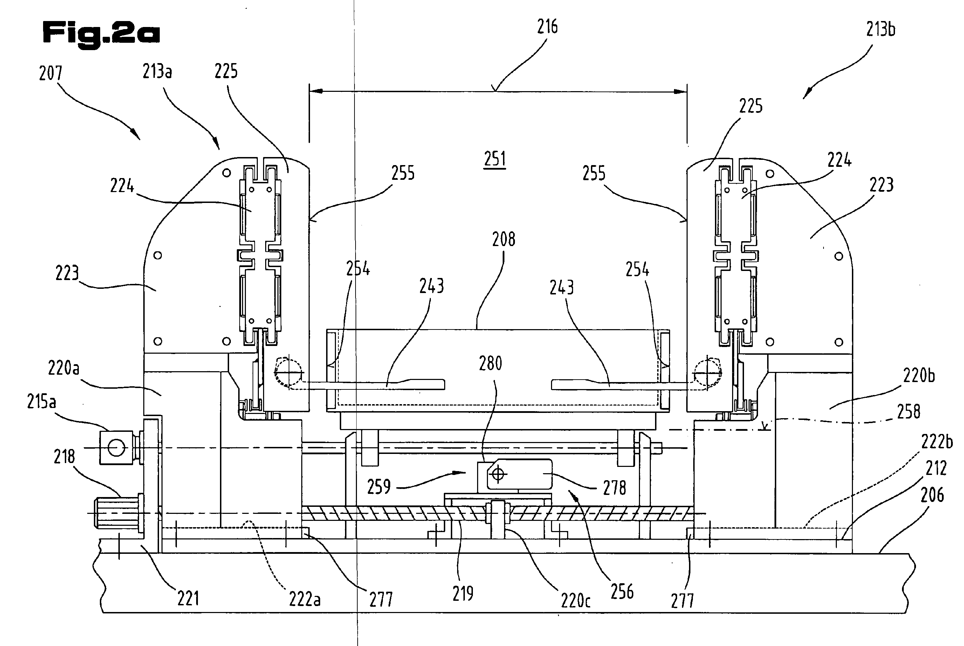

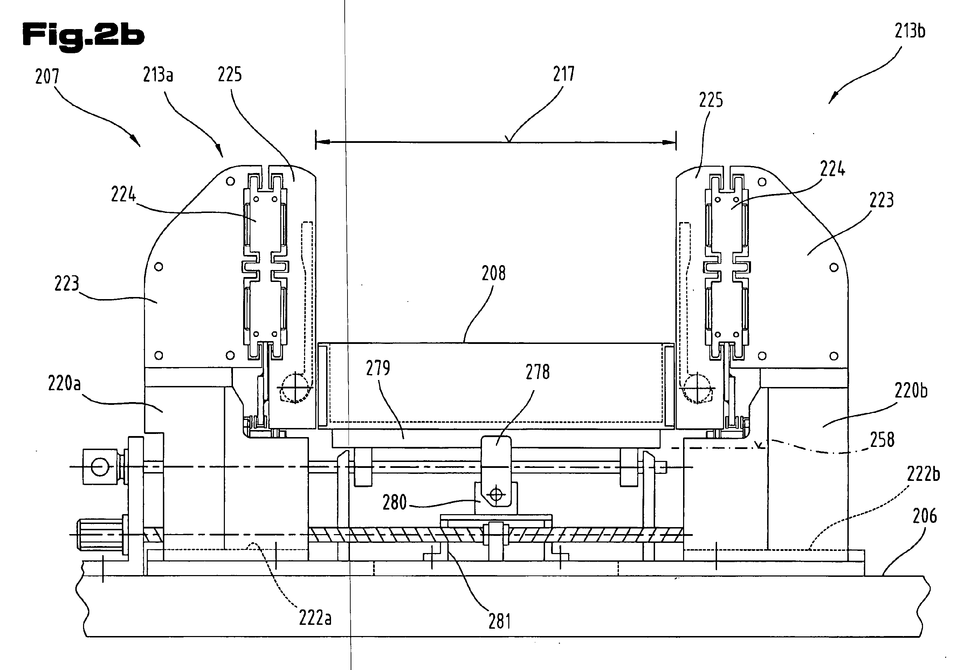

Die nach beiden Richtungen bezüglich der Plattform 206 in die Regalsysteme 201, 202 ausfahrbaren Teleskoparme 213a, 213b sind über einen ersten Stellantrieb zwischen einer in Fig. 2a gezeigten, auseinander bewegten Öffnungsstellung 216 und einer in Fig. 2b gezeigten, aufeinander zu bewegten Schließstellung 217 verstellbar auf der Tragplatte 212 gelagert. Der erste Stellantrieb weist einen Stellmotor 218 und nach dieser Ausführung eine an diesem gekoppelte Spindel 219 mit gegenläufigen Gewindeabschnitten und Lagerelemente 220a bis 220c auf. Der Stellmotor 218 wie auch die Antriebsmotoren 215a, 215b sind über einen Befestigungswinkel 221 an der Plattform 206 befestigt. Die Lagerelemente 220a, 220b sind jeweils über Führungsanordnungen 222a, 222b mit der Tragplatte 212 verbunden. Durch Drehen der Spindel 219 werden die Lagerelemente 220a, 220b aufeinander zu bewegt oder voneinander wegbewegt und dabei die Teleskoparme 213a, 213b relativ zu einem Ladehilfsmittel 208 zwischen seiner Öffnungsstellung 216 und Schließstellung 217 quer zur Übergaberichtung 210 verstellt.

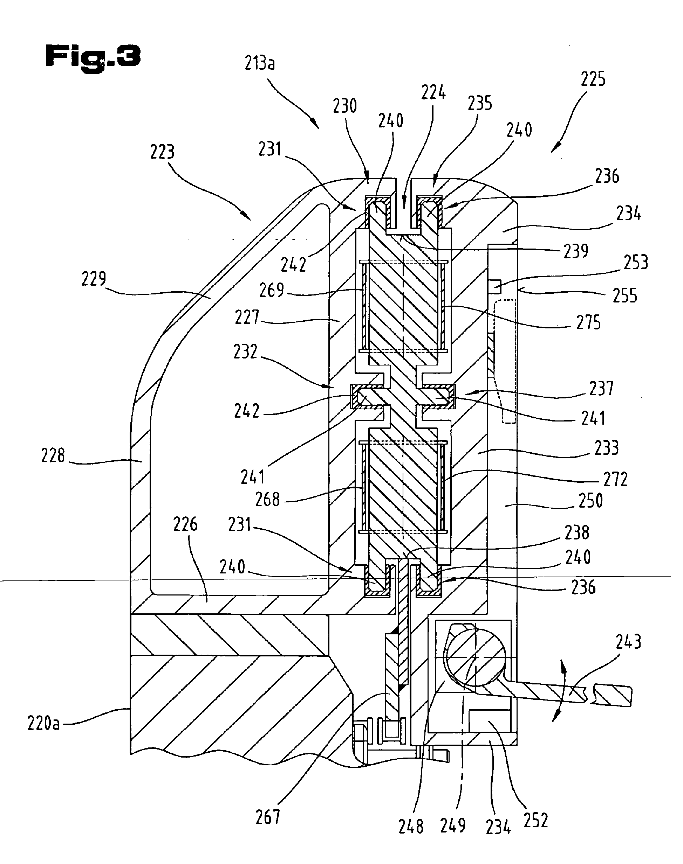

In Fig. 3 ist ein Querschnitt durch einen Teleskoparm 213a gezeigt. Dieser weist einen beispielsweise über eine nicht weiters dargestellte Schraubenverbindung am Lagerelement 220a befestigten Tragrahmen 223, einen gegenüber dem Tragrahmen 223 verschiebbaren Mittelschlitten 224 und einen gegenüber dem Mittelschlitten 224 verschiebbaren Oberschlitten 225 auf.

Der Tragrahmen 223 ist beispielsweise durch ein Hohlprofil ausgebildet und weist eine zur Tragplatte 212 parallel verlaufende untere Seitenwand 226, eine aufragende erste und zweite Seitenwand 227, 228 sowie eine zwischen den aufragenden Seitenwänden 227, 228 winkelig verlaufende obere Seitenwand 229 auf. Zwischen dem Mittelschlitten 224 und dem Tragrahmen 223 ist eine Führungsanordnung 230 vorgesehen, die nach gezeigtem Ausführungsbeispiel durch eine Gleitführung gebildet ist. Der Tragrahmen . 223 ist dazu auf der dem Mittelschlitten 224 zugewandten, aufragenden ersten Seitenwand 227 im Bereich der Längsränder mit Seitenführungsbahnen 231 und zwischen diesen mit einer Höhenführungsbahn 232 versehen.

Der Oberschlitten 225 ist im Querschnitt etwa C-formig ausgebildet und weist eine Basis 233 und an dieser auf der dem Mittelschlitten 224 abgewandten Seite vorspringende Schenkeln 234 auf. Zwischen dem Oberschlitten 225 und dem Mittelschlitten 224 ist eine Führungnanordnung 235 vorgesehen. Der Oberschlitten 225 ist dazu auf der dem Mittelschlitten 224 zugewandten, aufragenden Basis 233 im Bereich der Längsränder mit Seitenführungsbahnen 236 und zwischen diesen mit einer Höhenführungsbahn 237 versehen.

Der plattenartige Mittelschlitten 224 ist einerseits an seiner Unterseite 238 und Oberseite 239 jeweils mit in dessen Längserstreckung parallel verlaufenden und komplementär zu den Seitenruhrungsbahnen 231, 236 des Tragrahmens 223 und Oberschlittens 225 ausgebildeten, rippenartigen Führungsstegen 240 und andererseits an seinen Seitenwänden zwischen der Unter- und Oberseite 238, 239 jeweils mit in dessen Längserstreckung verlaufenden und komplementär zu den Höhenruhrungsbahnen 232, 237 des Tragrahmens 223 und Oberschlittens 225 ausgebildeten rippenartigen Führungsstegen 241 versehen. Auf die Führungsstege 240, 241 des Mittelschlittens 224 sind Gleitleisten 242 aufgesteckt.

Natürlich kann anstatt der gezeigten Gleitführungen zwischen dem Tragrahmen 223 und Mittelschlitten 224 einerseits und Oberschlitten 225 und Mittelschlitten 224 andererseits jeweils eine Rollenführung und dgl. angeordnet werden.

Wie in Zusammenschau der Fig. 1a bis 1h und 3 ersichtlich, sind an der Transportvorrichtung 207, insbesondere an den Oberschlitten 225 der Teleskoparme 213a, 213b jeweils an gegenüberliegenden Enden eine erste und zweite Anschlagvorrichtung 243, 244 und zwischen diesen eine mittlere dritte Anschlagvorrichtung 245 und zwischen der mittleren dritten Anschlagvorrichtung 245 und den endseitigen Anschlagvorrichtungen 243, 244 jeweils eine vierte und fünfte Anschlagvorrichtung 246, 247 angeordnet. Die . Anschlagvorrichtungen 243 bis 247 sind in Längserstreckung des Oberschlittens 225 zumindest soweit voneinander beabstandet, dass zwischen zwei Anschlagvorrichtungen 243 bis 247 jeweils ein Ladehilfsmittel 208 aufgenommen werden kann.

Die Anschlagvorrichtungen 243 bis 247 der beiden Oberschlitten 225 sind einander gegenüberliegend angeordnet und jeweils über einen fluidisch oder elektrisch betätigten Stellmotor 248 zwischen einer in Fig. 2b dargestellten Ausgangsstellung und einer in Fig. 2a dargestellten Betätigungsstellung in Richtung der gegenüberliegenden Anschlagvorrichtung 243 bis 247 verstellbar. Vorzugsweise ist jede Anschlagvorrichtungen 243 bis 247 der beiden Oberschlitten 225 an einen Stellmotor 248 gekoppelt, wobei die Stellmotoren 248 der gegenüberliegend angeordneten Anschlagvorrichtungen 243 bis 247 annähernd synchron angesteuert werden.

Nach gezeigtem Ausführungsbeispiel sind die Anschlagvorrichtungen 243 bis 247 durch um zur Übergaberichtung 210 parallele Achsen 249 zwischen der Ausgangs- und Betätigungsstellung schwenkbar am Oberschlitten 225 gelagerte Klappen gebildet.

In der Ausgangsstellung ist die Anschlagvorrichtung 243 bis 247 in eine Ausnehmung 250 zwischen den Schenkeln 234 des Oberschlittens 225 verstellt, daher ist die Anschlagvorrichtung 243 bis 247 aus einem Bewegungsweg 251 der Ladehilfsmittel 208 zwischen der Fördereinheit 204 und dem Regalfach 209 herausbewegt. Hingegen ist in der Betätigungsstellung die Anschlagvorrichtung 243 bis 247 aus der Ausnehmung 250 heraus verstellt, daher ist die Anschlagvorrichtung 243 bis 247 in den Bewegungsweg 251 der Ladehilfsmittel 208 zwischen der Fördereinheit 204 und dem Regalfach 209 hineinbewegt und ragt über die Außenumgrenzung des Oberschlittens 225 vor.

Wie in Fig. 3 weiters eingetragen, wird die Ausgangs- und Betätigungsstellung der Anschlagvorrichtung 243 bis 247 von Sensoren 252, 253 überwacht.

Die Transportvorrichtung 207 bzw. Ausfahreinheit umfasst ferner eine Ausrichtvorrichtung für auf der Fördervorrichtung 214a, 214b bereitgestellte Ladehilfsmittel 208, welche nach diesem Ausführungsbeispiel durch die in eine Schließstellung 217 gegenläufig aufeinander zu bewegbaren Teleskoparme 213a, 213b gebildet ist und in eine Ausricht- bzw. Zentrierstellung relativ zueinander verstellbare und gegen die in Übergaberichtung 210 parallelen Seitenwänden 254 anlegbare ebene Ausrichtflächen 255 aufweist. Vorzugsweise werden die einander gegenüberliegenden Ausrichtflächen 255 gegenläufig aufeinander in die Ausrichtstellung zubewegt, sodass ein Ladehilfsmittel 208 auf der Fördervorrichtung 214a, 214b mittig zwischen den Teleskoparmen 213a, 213b positioniert wird, bevor es in das Regalfach 209 abgeschoben wird. Andererseits könnte auch nur einer der Teleskoparme 213a, 213b in Richtung auf den gegenüberliegenden, ortsfesten Teleskoparm 213a, 213b verstellt werden.

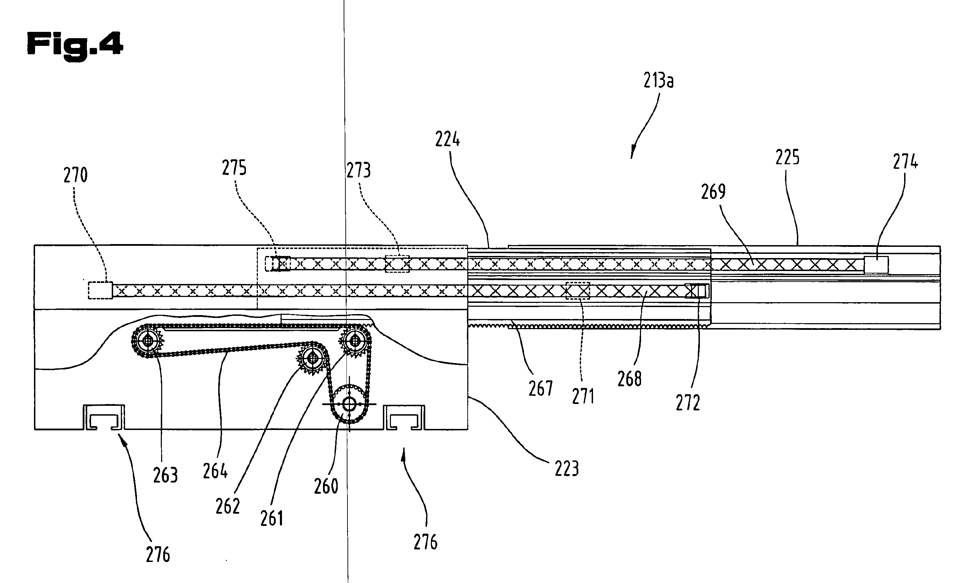

Die Teleskoparme 213a, 213b sind über einen zweiten Stellantrieb in Bezug auf die Plattform 206 nach beiden Richtungen teleskopartig ausziehbar, wie dies anhand der Fig. 3 und 4 erläutert wird.

An den Tragrahmen 223 der Teleskoparme 213a, 213b sind jeweils ein Zugmitteltrieb angeordnet, der ein Antriebsrad 260, Umlenkräder 261, 262, ein Spannrad 263 sowie ein um diese geführtes endloses Zugmittel 264, beispielsweise eine Kette, umfasst. Die Antriebsräder 260 sind über eine Antriebswelle 265 (Fig. 1a) miteinander verbunden und an einen Antriebsmotor 266 gekuppelt.

An den Mittelschlitten 224 ist jeweils ein Mitnahmeorgan 267, beispielsweise eine Zahnstange, befestigt, welche in das obere Trum des Zugmittels 264 eingreift. Dadurch werden bei einem Drehen der Antriebsräder 260 die Mittelschlitten 224 über die Zugmittel 264 und Mitnahmeorgane 267 mit einer Antriebskraft beaufschlagt und bezüglich der Tragrahmen 223 synchron verschoben, d.h. aus- oder eingefahren.

Um gleichzeitig die Oberschlitten 225 bezüglich des Mittelschlittens 224 zu verschieben, sind die Oberschlitten 225 vorzugsweise jeweils über zwei Zugmittel 268, 269, insbesondere Riemen, mit den Tragrahmen 223 verbunden.

Das erste Zugmittel 268 ist mit seinem ersten Enden mittels einer Klemme 270 am in Ausfahrrichtung des Teleskoparmes 213a, 213b gegenüberliegenden Endbereich des Tragrahmens 223 und mit seinem zweiten Enden mittels einer Klemme 271 am in Ausfahrrichtung des Teleskoparmes 213a, 213b gegenüberliegenden Endbereich des Oberschlittens 225 befestigt sowie um eine in Ausfahrrichtung des Teleskoparmes 213a, 213b im vorderen Endbereich des Mittelschlittens 224 gelagerte Rolle 272 umgelenkt.

Das zweite Zugmittel 269 ist mit seinem ersten Enden mittels einer Klemme 273 am in Ausfahrrichtung des Teleskoparmes 213a, 213b vorderen Endbereich des Tragrahmens 223 und mit seinem zweiten Enden mittels einer Klemme 274 am in Ausfahrrichtung des Teleskoparmes 213a, 213b vorderen Endbereich des Oberschlittens 225 befestigt sowie um eine in Ausfahrrichtung des Teleskoparmes 213a, 213b im gegenüberliegenden Endbereich des Mittelschlittens 224 gelagerte Rolle 275 umgelenkt.

Je nach Drehrichtung des Antriebsmotors 266 können nun die Teleskoparme 213a, 213b synchron ein- und ausgefahren werden, um Ladehilfsmittel 208 in ein Regalfach 209 des entweder auf der rechten Seite zur Gasse 203 aufgestellten Regalsystems 201 oder auf der linke Seite zur Gasse 203 aufgestellten Regalsystems 202 einzulagern oder aus einem Regalfach 209 des entweder auf der rechten Seite zur Gasse 203 aufgestellten Regalsystems 201 oder auf der linke Seite zur Gasse 203 aufgestellten Regalsystems 202 auszulägern.

Wie aus Fig. 4 ersichtlich ist der Tragrahmen 223 mit Führungselementen 276 versehen, die komplementär zu den am Tragrahmen 206 befestigten Führungselementen 277 (Fig. 2a, 2b) ausgebildet sind.

Die Transportvorrichtung 207 weist zusätzlich zwischen der ersten und dritten Anschlagvorrichtung 243, 245 sowie der zweiten und dritten Anschlagvorrichtung 244, 245 eine Vereinzelungsvorrichtung 256, 257 auf. Die Vereinzelungsvorrichtung 256, 257 ist bevorzugt unterhalb einer Förderebene 258 angeordnet und umfasst ein über einen Stellantrieb 259 zwischen einer in Fig. 2a dargestellten Grundstellung und einer in Fig. 2b dargestellten Vereinzelungsstellung verstellbares Rückhalteelement 278. In der Grundstellung ist das Rückhalteelement 278 unter die Förderebene 258 abgesenkt während in der Vereinzelungsstellung das Rückhalteelement 278 an der Förderebene 258 vorragt und in einen Stapelrand 279 des Ladehilfsmittels 208 eingreift. Der Stellantrieb 259 umfasst einen fluidisch oder elektrisch betätigten Stellmotor 280, der über ein Haltegestell 281 auf der Tragplatte 212 befestigt ist.

Wie in Fig. 1b eingetragen, ist es von Vorteil, wenn eine Länge 287 der Fördervorrichtung 214a, 214b größer ist als ein Längsabstand 288 zwischen den ersten/zweiten und vierten/fünften Anschlagvorrichtungen 243, 244, 246, 247. Vorzugsweise erstreckt sich die Fördervorrichtung 214a, 214b etwa über eine Länge 287, die einem Mehrfachen des Längsabstandes 288 entspricht, sodass auf der von jeder Fördervorrichtung 214a, 214b ausgebildeten Förderebene 258 zwei Ladehilfsmittel 208 hintereinander aufgenommen werden können und beide Ladehilfsmitiel 208 von ein und derselben Fördervorrichtung 241a, 214b mit einer Vorschub bzw. Antriebskraft zum Positionieren der Ladehilfsmittel 208 beaufschlagt werden. Die Vereinzelungsvorrichtung 256, 257 ist zwischen den Enden der Fördervorrichtung 214a, 214b angeordnet.

Im nachfolgenden wird anhand der Fig. 1a bis 1g das Verfahren zum Positionieren von Ladehilfsmitteln 208 vor deren Übergabe mit der Transportvorrichtung 207 von der Fördereinheit 204 in ein Regalfach 209 der Regalsysteme 1, 2 beschrieben.

Noch bevor die Transportvorrichtung 207 in die vom Rechnersystem festgelegte Lagerposition vor einen Lagerkanal 282 verfährt, werden in einer in den Fig. 1a bis 1c gezeigten Vorzone 283 des Lagersystems gegebenenfalls entsprechend den Kommissionieraufträgen von zumindest einer Fördervorrichtung 284 nacheinander Ladehilfsmittel 208 antransportiert und von der Transportvorrichtung 207 übernommen. Die Fördervorrichtung 284 ist beispielsweise durch einen Rollenförderer gebildet.

Vor der Verlagerung der Ladehilfsmittel 208 - beispielsweise vier Ladehilfsmittel 208 mit den Abmessungen 300 mm x 400 mm - von der Fördervorrichtung 284 auf die Transportvorrichtung 207 muss sichergestellt werden, dass mit Ausnahme des von der Fördervorrichtung 284 abgewandten Paares von Anschlagvorrichtungen 243 sämtliche Anschlagvorrichtungen 244 bis 247 in die Ausgangsstellung und die Teleskoparme 213a, 213b in ihre Öffnungsstellung 216 bewegt wurden. Das einer Übernahmeseite der Ladehilfsmittel 208 gegenüberliegende Paar von Anschlagvorrichtungen 243 wird in die Betätigungsstellung, daher in den Bewegungsweg 251 der Ladehilfsmittel 208 verstellt, wie in den Fig. 1b und 1c gezeigt. Die Fördervorrichtung 284 der Vorzone 283 und die Fördervorrichtungen 214a, 214b der Transportvorrichtung 207 werden zur Verlagerungsbewegung der Ladehilfsmittel 208 auf die Transportvorrichtung 207 mit annähernd gleicher Fördergeschwindigkeit angetrieben.

Die Ladehilfsmittel 208 werden sodann auf der Transportvorrichtung 207 mittels der Fördervorrichtungen 214a, 214b entlang dem Bewegungsweg 251 gefördert und das von der Transportvorrichtung 207 übernommene erste Ladehilfsmittel 208 gegen die auf der Einlagerseite angeordneten Anschlagvorrichtungen 243 positioniert und die nachfolgenden Ladehilfsmittel 208 hinter dem ersten Ladehilfsmittel 208 aufgestaut, wie in Fig. 1c gezeigt.

Sind nun die Ladehilfsmittel 208 auf der Transportvorrichtung 207 abgestellt, wird die Transportvorrichtung 207 mittels der Fördereinheit 204 aus der Vorzone 283 in die vom Rechnersystem festgelegte Lagerposition vor den Lagerkanal 282 verfahren.

Während der Verstellbewegung der Transportvorrichtung 207 erfolgt der Positioniervorgang der Ladehilfsmittel 208 auf der Plattform 206, wie dies anhand der Fig. 1d bis 1g beschrieben wird.

Die Ladehilfsmittel 208 müssen vor ihrer Übergabe in den Lagerkanal 282 des Regalfaches 209 auf der Fördereinheit 204 positioniert werden. Hierzu werden vorerst die zweiten Anschlagvorrichtungen 244 aus ihrer Ausgangsstellung in die Betätigungsstellung bewegt und die Ladehilfsmittel 208 mittels der in entgegensetzter Förderrichtung angetriebene Fördervorrichtungen 214a, 214b zu Gruppen vereinzelt auseinander bewegt und gegen die in den Bewegungsweg 251 verstellten Anschlagvorrichtungen 243, 244 positioniert, wie in Fig. 1d dargestellt und durch die Pfeile angedeutet. Sind die Ladehilfsmittel 208 gegen die Anschlagvorrichtungen 243, 244 aufgelaufen, wird über nicht dargestellte Sensoren, beispielsweise Lichtschranken, die Anwesenheit der Ladehilfsmittel 208 erfasst und die Fördervorrichtungen 214a, 214b vom Rechnersystem angesteuert und stillgesetzt.

Sodann werden die mittleren dritten Anschlagvorrichtungen 245 aus ihrer Ausgangsstellung in die Betätigungsstellung bewegt und das Rückhalteelement 278 der Vereinzelungsvorrichtungen 256, 257 in die Vereinzelungsstellung (Fig. 1d und 2b) zwischen die dicht aneinander liegenden Ladehilfsmittel 208, insbesondere zwischen die Stapelränder 279 der Ladehilfsmitteln 208, verstellt, worauf die Fördervorrichtungen 214a, 214b wiederum gegenläufig angetrieben werden, wie in Fig. 1e durch die Pfeile angedeutet, und dabei das in Übergaberichtung 210 vorderste und hinterste Ladehilfsmittel 208 bzw. die vorhergehend gegen die endseitigen Anschlagvorrichtungen 243, 244 positionierten Ladehilfsmittel 208 aufeinander zu bewegt. Dabei laufen die Ladehilfsmittel 208 jeweils mit ihrem Stapelrand 279 gegen das Rückhalteelement 278 der Vereinzelungsvorrichtungen 256, 257 auf, wie in Fig. 1e dargestellt. Gleichzeitig werden auch die zwischen den äußeren Ladehilfsmitteln 208 befindlichen inneren Ladehifsmitteln 208 aufeinander zu bewegt und gegen die in die Betätigungsstellung bewegten mittleren dritten Anschlagvorrichtungen 245 positioniert, wie ebenfalls in Fig. 1e dargestellt. Sind die inneren Ladehilfsmittel 208 gegen die Anschlagvorrichtungen 245 aufgelaufen, wird über nicht dargestellte Sensoren, beispielsweise Lichtschranken, die Anwesenheit der inneren Ladehilfsmittel 208 erfasst und die Fördervorrichtungen 214a, 214b vom Rechnersystem angesteuert und stillgesetzt.

Auf diese Weise wird zwischen dem jeweils äußeren und inneren Ladehilfsmittel 208 ein Abstandsspalt 285 gebildet, der es nun ermöglicht, dass die vierten und fünften Anschlagvorrichtungen 246, 247 aus ihrer Ausgangsstellung in die in Fig. 1f gezeigte Betätigungsstellung bewegt werden können.

Danach werden die Rückhalteelemente 278 aus ihrer Vereinzelungsstellung in die gegenüber der Förderebene 258 abgesenkte Grundstellung (Fig. 1g und 2a) bewegt, sodass die Ladehilfsmittel 208 mittels der Fördervorrichtungen 214a, 214b zwischen den Anschlagvorrichtungen 243 bis 247 entlang dem Bewegungsweg 251 befördert werden können. Wie in Fig. 1g gezeigt, werden die Ladehilfsmittel 208 vorzugsweise noch vor ihrer Übergabe in den Lagerkanal 282 durch gleichsinnigen Antrieb der Fördervorrichtungen 214a, 214b in zur Übergaberichtung 210 entgegen gesetzter Richtung angetrieben und sämtliche Ladehilfsmittel 208 gegen die Anschlagvorrichtungen 244 bis 246 positioniert. Sind alle Ladehilfsmittel 208 gegen die Anschlagvorrichtungen 244 bis 247 aufgelaufen, wird über die Sensoren die Anwesenheit der inneren und äußeren Ladehilfsmittel 208 erfasst und die Fördervorrichtungen 214a, 214b stillgesetzt.

Ist die Lagerposition erreicht, ist die Transportvorrichtung 207 soweit verfahren, dass ihre von den Fördervorrichtungen 14a, 14b ausgebildete Förderebene 258 - wie in Fig. 2a und 2b eingetragen - und eine Lagerfläche des Regalfaches 209 annähernd fluchten und die Transportvorrichtung 207 mittig zu den hintereinander liegenden Abstellplätzen 211 a bis 211 d des Lagerkanals 282 positioniert ist.

Zum Einlagern der Ladehilfsmittel 208 in den Lagerkanal 282 werden die Teleskoparme 213a, 213b synchron ausgefahren und dabei die Ladehilfsmitteln 208 in den Lagerkanal 282 auf die Abstellplätze 211a bis 211d geschoben, wie in Fig. 1h gezeigt. Gleichzeitig werden auch die Fördervorrichtungen 214a, 214b in Übergaberichtung 210 angetrieben. Die Fördergeschwindigkeit der Fördervorrichtungen 214a, 214b entspricht annähernd der Ausfahrgeschwindigkeit der Teleskoparme 213a, 213b.

Danach werden die Teleskoparme 213a, 213b aus ihrer Schließstellung 217 in die Öffnungsstellung 216 sowie die Anschlagvorrichtungen 243 bis 247 aus ihrer Betätigungsstellung in die Ausgangsstellung relativ zu den Ladehilfsmitteln 208 bewegt, sodass die Ladehilfsmittel 208 freigestellt sind und die Teleskoparme 213a, 213b wieder einfahren können.

Beim Auslagern von Ladehilfsmitteln 208 aus dem Regalfach 209 werden die Teleskoparme 213a, 213b in die Öffnungsstellung 216 bewegt und vollständig ausgefahren. Danach werden die Teleskoparme 213a, 213b wieder in ihre Schließstellung 217 und die Anschlagvorrichtungen 243 bis 247 aus ihrer Ausgangsstellung in die Betätigungsstellung bewegt, in welcher sich die Anschlagvorrichtungen 243, 245 bis 247 hinter der Rückwand 286 der eingelagerten Ladehilfsmittel 208 befinden. Sodann werden die Teleskoparme 213a, 213b auf die Plattform 206 eingefahren und dabei die Ladehilfsmittel 208 auf die Förderebene 258 der Transportvorrichtung 207 geschoben. Gleichzeitig mit dem Einfahren der Teleskoparme 213a, 213b werden die Fördervorrichtungen 214a, 214b entgegen der Übergaberichtung 210 angetrieben. Die Fördergeschwindigkeit der Fördervorrichtungen 214a, 214b entspricht annähernd der Einfahrgeschwindigkeit der Teleskoparme 213a, 213b.

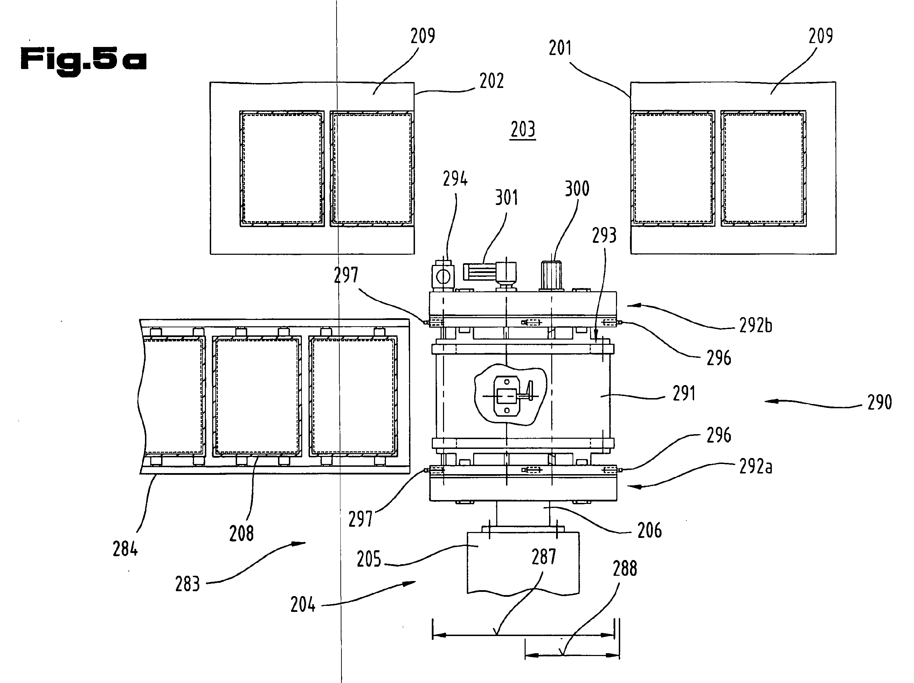

In den Fig. 5a bis 5f ist eine weitere Ausführung der Transportvorrichtung 290 zum Ein- bzw. Auslagern von Ladehilfsmitteln 208 in ein bzw. aus einem Regalfach 209 der zu beiden Seiten aufgestellten Regalsysteme 201, 202 gezeigt, die eine Tragplatte 291 aufweist, auf der eine, parallel angeordnete Teleskoparme 292a, 292b aufweisende Ausfahreinheit und zwischen diesen eine Fördervorrichtung 293, beispielsweise Zweispurförderer, gelagert ist. Die Fördervorrichtung 293 ist an einen Antriebsmotor 294 gekoppelt. In einem Lagerkanal 282 eines Regalfaches 209 sind in Übergaberichtung 210 hintereinander zwei Ladehilfsmittel 208, beispielsweise mit den Abmessungen 300 mm x 400 mm abstellbar. Die Transportvorrichtung 290 kann ebenso zwei Ladehilfsmittel 208 im Quertransport hintereinander aufnehmen.

Wie in Fig. 5a eingetragen, ist eine Länge 287 der Fördervorrichtung 293 größer ist als ein Längsabstand 288 zwischen den ersten/zweiten und dritten Anschlagvorrichtungen 296, 297, 298. Vorzugsweise erstreckt sich die Fördervorrichtung 293 etwa über eine Länge 287, die einem Mehrfachen des Längsabstandes 288 entspricht, sodass von der die Fördervorrichtung 293 ausbildenden Förderebene 258 zwei Ladehilfsmittel 208 aufgenommen werden können und beide Ladehilfsmittel 208 mit derselben Vorschub- bzw. Antriebskraft zum Positionieren der Ladehilfsmittel 208 beaufschlagt werden. Die Vereinzelungsvorrichtung 299 ist zwischen den Enden der Fördervorrichtung 293 angeordnet.

Die Teleskoparme 292a, 292b der Ausfahreinheit sind über einen Stellmotor 300 eines ersten Stellantrieb zwischen einer auseinander bewegten Öffnungsstellung 216 und einer aufeinander zu bewegten Schließstellung 217 verstellbar auf der Tragplatte 291 gelagert sowie über einen Antriebsmotor 301 eines zweiten Stellantriebes in Bezug auf die Plattform 206 nach beiden Richtungen teleskopartig ausziehbar, wie oben beschrieben. Der Aufbau der Teleskoparme 213a, 213b entspricht dem oben beschriebenen und weisen diese den Tragrahmen 223, Mittel- und Oberschlitten 224, 225 auf.

Die Transportvorrichtung 290 bzw. die Teleskoparme 292a, 292b der Ausfahreinheit umfassen zusätzlich über unabhängig voneinander steuerbare Stellmotoren 295 zwischen der oben beschriebenen Ausgangsstellung und Betätigungsstellung bewegbare Anschlagvorrichtungen 296 bis 298. Die Oberschlitten 225 der Teleskoparme 292a, 292b sind jeweils an gegenüberliegenden Enden mit einer ersten und zweiten Anschlagvorrichtung 296, 297 und zwischen diesen mit einer mittleren dritten Anschlagvorrichtung 298 versehen.

Die Transportvorrichtung 290 weist zusätzlich zwischen der ersten und zweiten Anschlagvorrichtung 296, 297 eine Vereinzelungsvorrichtung 299 auf, welche das oben beschriebene, verstellbare Rückhalteelement 278 umfasst.

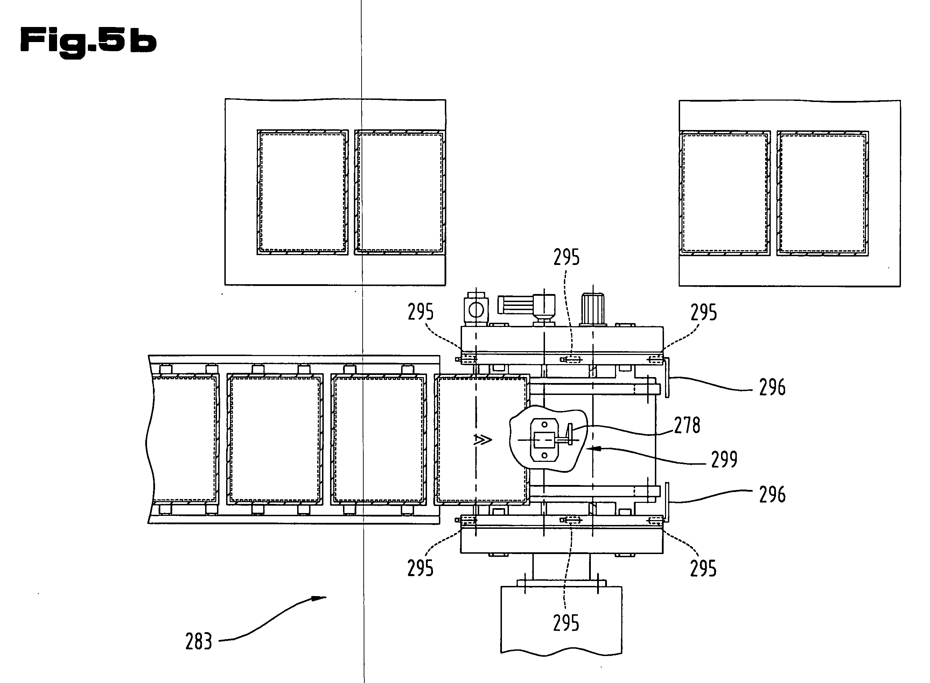

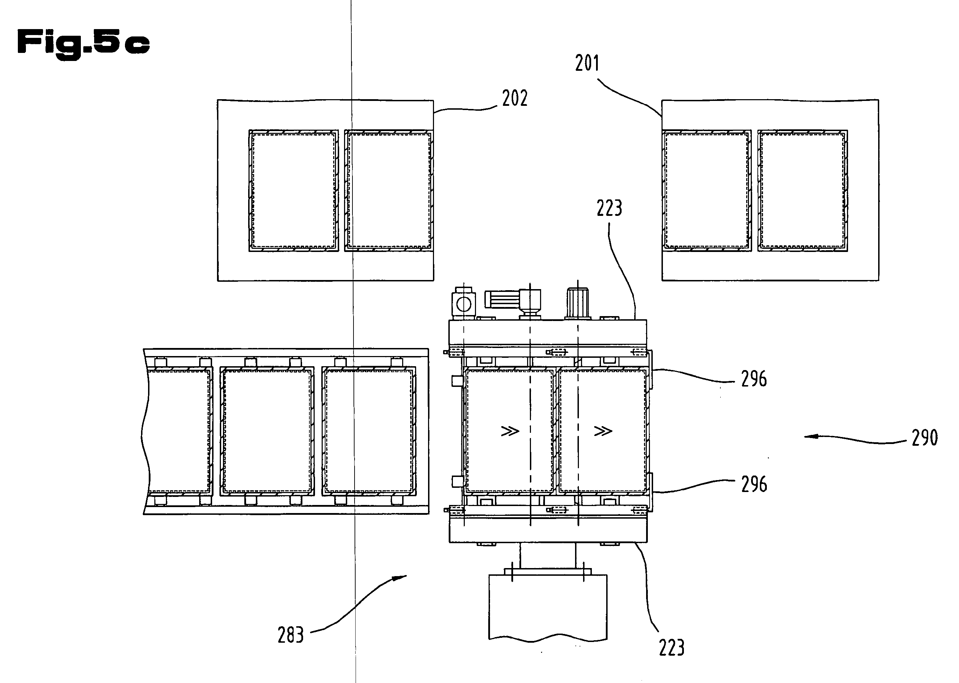

Die Ladehilfsmittel 208 werden wiederum von einer Fördervorrichtung 284 in die Vorzone 283 angefordert und von der Tansportvorrichtung 290 übermommen sowie an den der Übernahmeseite gegenüber liegenden Anschlagvorrichtungen 296 aufgestaut, wie in den Fig. 5b und 5c dargestellt. Die Fördervorrichtung 284 der Vorzone 283 und die Fördervorrichtung 293 der Transportvorrichtung 290 werden zur Verlagerungsbewegung der Ladehilfsmittel 208 auf die Transportvorrichtung 290 mit annähernd gleicher Fördergeschwindigkeit angetrieben.

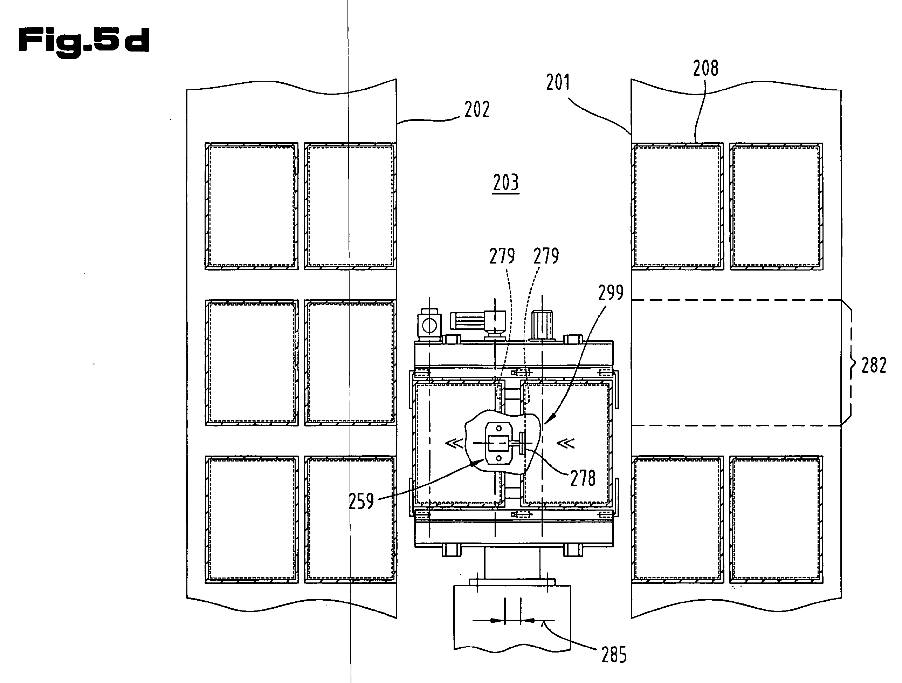

Sind nun die Ladehilfsmittel 208 gegen die Anschlagvorrichtungen 296 positioniert worden, werden die Anschlagvorrichtungen 297 auf der Übernahmeseite in die Betätigungsstellung bewegt und die Fördervorrichtung 293 entgegen der Übergaberichtung 210 angetrieben und dabei das in Übergaberichtung 210 vordere Ladehilfsmittel 208 an dem zuvor in die Vereinzelungsstellung bewegten Rückhalteelement 278 zurückgehalten, während das in Übergaberichtung 210 hintere Ladehilfsmittel 208 gegen die Anschlagvorrichtung 297 positioniert wird, wie in Fig. 5d gezeigt. Ist das Ladehilfsmittel 208 gegen die Anschlagvorrichtungen 297 aufgelaufen, wird über einen nicht dargestellten Sensor, beispielsweise eine Lichtschranke, die Anwesenheit des Ladehilfsmittels 208 erfasst und die Fördervorrichtung 293 vom Rechnersystem angesteuert und stillgesetzt.

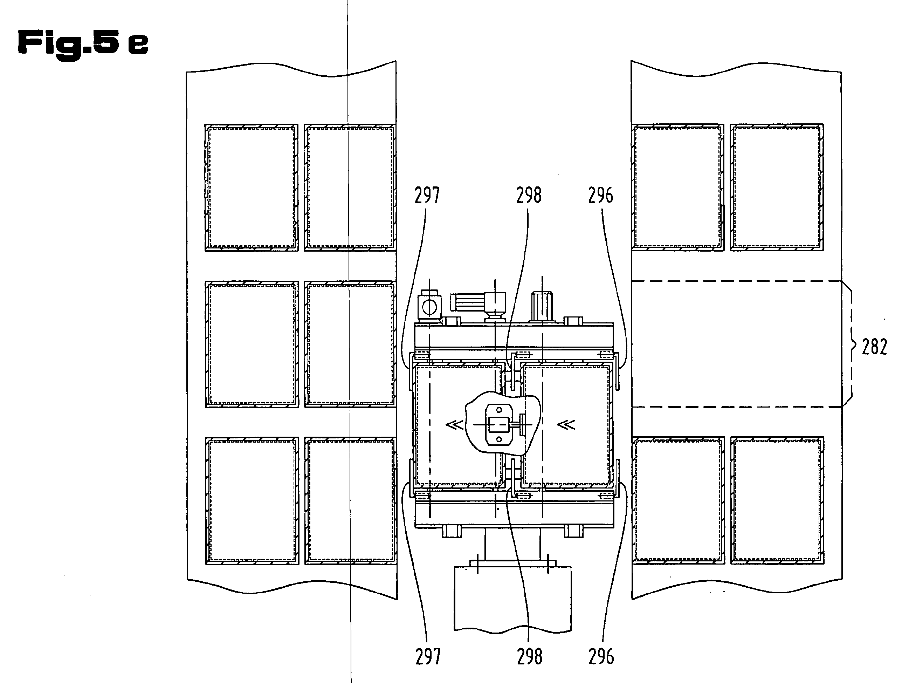

Durch die Vereinzelung wird der Abstandsspalt 285 zwischen den Ladehilfsmittel 208 gebildet, sodass die mittleren dritten Anschlagvorrichtungen 298 ebenso in die Betätigungsstellung bewegt werden können, wie in den Fig. 5e gezeigt.

Danach wird das Rückhalteelement 278 aus ihrer Vereinzelungsstellung in die gegenüber der Förderebene 258 abgesenkte Grundstellung bewegt, sodass die Ladehilfsmittel 208 zwischen den Anschlagvorrichtungen 296 bis 297 mittels der Fördervorrichtung 293 entlang dem Bewegungsweg 251 befördert werden können.

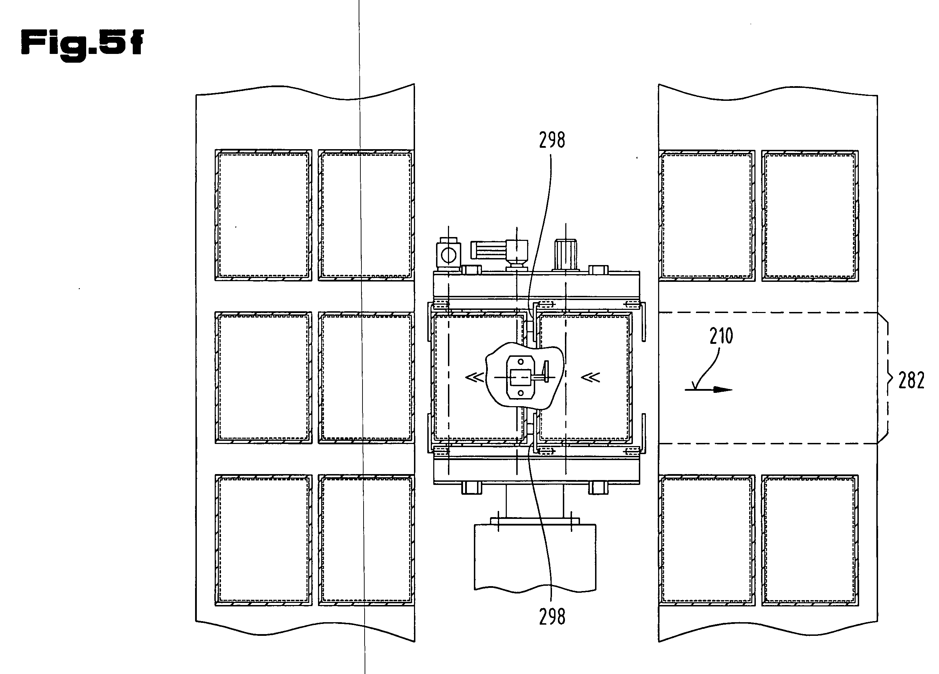

Wie in Fig. 5f gezeigt, werden die vereinzelten Ladehilfsmittel 208 noch vor ihrer Übergabe in den Lagerkanal 282 durch Antrieb der Fördervorrichtung 293 in zur Übergaberichtung 210 entgegen gesetzter Förderrichtung gegen die Anschlagvorrichtungen 297, 298 positioniert. Sind die Ladehilfsmitteln 208 gegen die Anschlagvorrichtungen 297, 298 aufgelaufen, wird über nicht dargestellte Sensoren, beispielsweise Lichtschranken, die Anwesenheit des vorderen und hinteren Ladehilfsmittels 208 erfasst und die Fördervorrichtung 293 vom Rechnersystem angesteuert und stillgesetzt.

Die Ein- und Auslagerung erfolgt auf dieselbe oben beschriebene Weise.

Abschließend sei noch darauf hingewiesen, dass auch nur einer der beiden Teleskoparme 213a, 213b; 292a, 292b quer zu deren Längserstreckung verstellbar sein kann. Ebenso kann auch vorgesehen sein, dass die Ausfahreinheit nur einen, an der Tragplatte 212; 291 gelagerten Teleskoparm 213a, 213b; 292a, 292b aufweist und/oder von den beiden Teleskoparmen 213a, 213b; 292a, 292b nur ein Teleskoparm 213a, 213b; 292a, 292b mit den Anschlagvorrichtungen 243 bis 247; 296 bis 298 versehen ist.

Auch wenn in den gezeigten Ausführungsbeispielen die Vereinzelungsvorrichtung 256, 257; 299 unterhalb der Förderebene 258 angeordnet ist, ist es genauso gut möglich, dass diese seitlich zum Bewegungsweg 251 angeordnet ist und das zwischen der Grundstellung und Vereinzelungsstellung bewegbare Rückhalteelement 278 zwischen die Seitenwände 254 der Ladehilfsmittel 208 oder in eine an der Seitenwand 254 eines Ladehilfsmittels 208 angeordnete Rippe, Nut oder Bohrung und dgl. formschlüssig eingreift.

Ebenso kann die Vereinzelungsvorrichtung 256, 257; 299 oberhalb des Bewegungsweges 251 der Ladehilfsmittel 208 angeordnet sein und wird dementsprechend das Rückhalteelement 278 von oben zwischen die aneinander stoßenden Ladehilfsmitteln 208 bewegt und dabei die Ladehilfsmittel 208 um den Abstandsspalt 285 voneinander distanziert.

Der Ordnung halber sei abschließend darauf hingewiesen, dass zum besseren Verständnis des Aufbaus der Transportvorrichtung 207; 290 diese bzw. deren Bestandteile teilweise unmaßstäblich und/oder vergrößert und/oder verkleinert dargestellt wurden.

### Bezugszeichenaufstellung

- 201: Regalsystem
- 202: Regalsystem
- 203: Gasse
- 204: Fördereinheit
- 205: Mast

- 206: Plattform
- 207: Transportvorrichtung
- 208: Ladehilfsmittel
- 209: Regalfach
- 210: Übergaberichtung

- 211 a: Abstellplatz
- 211b: Abstellplatz
- 211c: Abstellplatz
- 211d: Abstellplatz
- 212: Tragplatte

- 213a: Teleskoparm
- 213b: Teleskoparm
- 214a: Fördervorrichtung
- 214b: Fördervorrichtung
- 215a: Antriebsmotor

- 215b: Antriebsmotor
- 216: Öffnungsstellung
- 217: Schließstellung 218 Stellmotor
- 219: Spindel

- 220a: Lagerelement
- 220b: Lagerelement
- 220c: Lagerelement
- 221: Befestigungswinkel
- 222a: Führungsanordnung

- 222b: Führungsanordnung
- 223: Tragrahmen
- 224: Mittelschlitten
- 225: Oberschlitten
- 226: Seitenwand

- 227: Seitenwand
- 228: Seitenwand
- 229: Seitenwand
- 230: Führungsanordnung
- 231: Seitenführungsbahn

- 232: Höhenführungsbahn
- 233: Basis
- 234: Schenkel
- 235: Führungsanordnung
- 236: Seitenführungsbahn

- 237: Höhenführungsbahn
- 238: Unterseite
- 239: Oberseite
- 240: Führungssteg
- 241: Führungssteg

- 242: Gleitleiste
- 243: Anschlagvorrichtung
- 244: Anschlagvorrichtung
- 245: Anschlagvorrichtung
- 246: Anschlagvorrichtung

- 247: Anschlagvorrichtung
- 248: Stellmotor
- 249: Achse
- 250: Ausnehmung 251 Bewegungsweg

- 252: Sensor
- 253: Sensor
- 254: Seitenwand
- 255: Ausrichtfläche
- 256: Vereinzelungsvorrichtung

- 257: Vereinzelungsvorrichtung
- 258: Förderebene
- 259: Stellantrieb
- 260: Antriebsrad
- 261: Umlenkrad
- 262: Umlerkrad
- 263: Spannrad
- 264: Zugmittel
- 265: Antriebswelle
- 266: Antriebsmotor

- 267: Mitnahmeorgan
- 268: Zugmittel
- 269: Zugmittel
- 270: Klemme
- 271: Klemme

- 272: Rolle
- 273: Klemme
- 274: Klemme
- 275: Rolle
- 276: Führungselement

- 277: Führungselement
- 278: Rückhalteelement
- 289: Stapelrand
- 280: Stellmotor
- 281: Haltegestell

- 282: Lagerkanal
- 283: Vorzone
- 284: Fördervorrichtung
- 285: Abstandsspalt
- 286: Rückwand

- 287: Länge
- 288: Längsabstand
- 289:
- 290: Transportvorrichtung
- 291: Tragplatte

- 292a: Teleskoparm
- 292b: Teleskoparm
- 293: Fördervorrichtung
- 294: Antriebsmotor
- 295: Stellmotor

- 296: Anschlagvorrichtung
- 297: Anschlagvorrichtung
- 298: Anschlagvorrichtung
- 299: Vereinzelungsvorrichtung
- 300: Stellmotor
- 301: Antriebsmotor

## Patentansprüche

1. Verfahren zum Positionieren von Ladehilfsmitteln (208) vor deren Übergabe in ein Regalfach (209) auf hintereinander angeordnete Abstellplätze (211a bis 211d) mit einer Transportvorrichtung (207; 290), wobei die Ladehilfsmittel (208) aneinander liegend, hintereinander gegen eine in Übergaberichtung (210) erste Anschlagvorrichtung (243 bis 247; 296 bis 298) der Transportvorrichtung (207; 290) positioniert werden, sodann eine Vereinzelungsvorrichtung (256, 257; 299) in den Bewegungsweg (251) zwischen die Ladehilfsmittel (208) verstellt und das in Übergaberichtung (210) vordere Ladehilfsmittel (208) gegen die Vereinzelungsvorrichtung (256, 257; 299) und das in Übergaberichtung (210) hintere Ladehilfsmittel (208) gegen eine in Übergaberichtung (210) zweite Anschlagvorrichtung (243 bis 247; 296 bis 298) der Transportvorrichtung (207; 290) positioniert werden, wonach eine dritte Anschlagvorrichtung (243 bis 247; 296 bis 298) zwischen die vereinzelten Ladehilfsmittel (208) verstellt wird.

2. Verfahren nach Anspruch 1, **dadurch gekennzeichnet, dass** die Ladehilfsmittel (208) vor der bevorstehenden Übergabe in das Regalfach (209) von einer Ausrichtvorrichtung (255) der Transportvorrichtung (207; 290) parallel zur Übergaberichtung (210) positioniert werden.

3. Verfahren nach Anspruch 1 oder 2, **dadurch gekennzeichnet, dass** die Ladehilfsmittel (208) zu Gruppen dicht aneinander liegender Ladehilfsmittel (208) vereinzelt und jede der Gruppen gegen in Übergaberichtung (210) mit Abstand angeordnete Anschlagvorrichtungen (243 bis 247; 296 bis 298) der Transportvorrichtung (207; 290) positioniert werden, sodann je Gruppe eine Vereinzelungsvorrichtung (256, 257; 299) in den Bewegungsweg (251) zwischen die Ladehilfsmittel (208) verstellt und jeweils das gegen die Anschlagvorrichtungen (243 bis 247; 296 bis 298) positionierte Ladehilfsmittel (208) gegen die entsprechende Vereinzelungsvorrichtung (256, 257; 299) und die benachbart liegenden Ladehilfsmittel (208) gegen eine dritte Anschlagvorrichtung (243 bis 247; 296 bis 298) der Transportvorrichtung (207; 290) positioniert werden, wonach Anschlagvorrichtungen (243 bis 247; 296 bis 298) jeweils zwischen die vereinzelten Ladehilfsmittel (208) verstellt werden.

4. Verfahren nach Anspruch 1 oder 3, **dadurch gekennzeichnet, dass** das/die Ladehilfsmittel (208) vor der bevorstehenden Übergabe in das Regalfach (209) mit einer in Übergaberichtung (210) hinteren Seitenwand gegen die Anschlagvorrichtung (243 bis 247; 296 bis 298) der Transportvorrichtung (207; 290) in Übergaberichtung (210) positioniert wird/werden.

5. Transportvorrichtung (207; 290) zum Positionieren von Ladehilfsmitteln (208) vor deren Übergabe in ein Regalfach (209) auf hintereinander angeordnete Lagerplätze (211a bis 211d) zur Durchführung des Verfahrens nach einem der Ansprüche 1 bis 4, welche Transportvorrichtung (207; 290) in Übergaberichtung (210) eine erste und zweite Anschlagvorrichtung (243 bis 247; 296 bis 298) sowie zwischen diesen eine dritte Anschlagvorrichtung (243 bis 247; 296 bis 298) umfasst, **dadurch gekennzeichnet, dass** die Transportvorrichtung (207; 290) zusätzlich eine zwischen der ersten und zweiten Anschlagvorrichtung (243 bis 247; 296 bis 298) angeordnete Vereinzelungsvorrichtung (256, 257; 299) aufweist, welche zur Vereinzelung von dicht aneinander anliegenden Ladehilfsmitteln (208) ein in eine Vereinzelungsstellung zwischen die dicht aneinander anliegenden Ladehilfsmitteln (208) verstellbares Rückhaltelement (278) ausbildet.

6. Transportvorrichtung nach Anspruch 5, **dadurch gekennzeichnet, dass** die Vereinzelungsvorrichtung (256, 257; 299) ein mittels des Stellantriebes (259) zwischen einer unterhalb einer Förderebene (258) liegenden Grundstellung und einer aus der Förderebene (258) herausragenden Vereinzelungsstellung verstellbares Rückhalteelement (278) aufweist.

7. Transportvorrichtung nach Anspruch 5, **dadurch gekennzeichnet, dass** die Transportvorrichtung (207; 290) parallel ausfahrbare Teleskoparmen (213a, 213b; 292a, 292b) aufweist, die jeweils mit den Anschlagvorrichtungen (243 bis 247; 296 bis 298) versehen sind, wobei die Anschlagvorrichtungen (243 bis 247; 296 bis 298) der beiden Teleskoparme (213a, 213b; 292a, 292b) einander gegenüberliegen und jeweils in Richtung der gegenüberliegenden Anschlagvorrichtungen (243 bis 247; 296 bis 298) verstellbar sind.

8. Transportvorrichtung nach Anspruch 7, **dadurch gekennzeichnet, dass** die Teleskoparme (213a, 213b; 292a, 292b) über einen Stellantrieb quer zu dessen Längserstreckung relativ zueinander verstellbar auf der Fördereinheit (4) gelagert sind.

9. Transportvorrichtung nach Anspruch 5, **dadurch gekennzeichnet, dass** die Transportvorrichtung (207; 290) eine Fördervorrichtung (214a, 214b; 293), insbesondere einen Zweispurförderer, umfasst und eine Länge (287) der Fördervorrichtung (214a, 214b; 293) größer ist als ein Längsabstand (288) zwischen den hintereinander angeordneten Anschlagvorrichtungen (243 bis 247; 296 bis 298) sowie eine zumindest zwei Ladehilfsmitteln (208) aufnehmende Förderebene (258) ausbildet.

## Claims

1. Method for positioning loading aids (208) prior to the transfer thereof into a shelf compartment (209) on storage spaces (211a to 211d) disposed behind one another using a transport device (207; 290), which loading aids (208) are positioned against one another, behind one another against a first stop device (243 to 247; 296 to 298) of the transport device (207; 290) in the transfer direction (210), then a separating device (256, 257; 299) is moved into the movement path (251) between the loading aids (208) and the front loading aid (208) in transfer direction (210) is positioned against the separating device (256, 257; 299) and the rear loading aid (208) in the transfer direction (210) is positioned against a second stop device (243 to 247; 296 to 298) of the transport device (207; 290) in the transfer direction (210), after which a third stop device (243 to 247; 296 to 298) is moved between the separated loading aids (208).

2. Method as claimed in claim 1, **characterised in that** the loading aids (208) prior to the transfer thereof into the shelf compartment (209) are positioned by an alignment device (255) of the transport device (207; 290) parallel to the transfer direction (210).

3. Method as claimed in claim 1 or 2, **characterised in that** the loading aids (208) are separated into groups of closely adjacent loading aids (208) and each of the groups is positioned against stop devices (243 to 247; 296 to 298) of the transport device (207; 290) arranged spaced apart in the direction of transfer (210), then for each group one separating device (256, 257; 299) is moved into the movement path (251) between the loading aids (208) and the loading aid (208) positioned against the stop devices (243 to 247; 296 to 298) is positioned against the corresponding separating device (256, 257; 299) and the adjacent loading aids (208) are positioned against a third stop device (243 to 247; 296 to 298) of the transport device (207; 290), after which stop devices (243 to 247; 296 to 298) are moved respectively between the separated loading aids (208).

4. Method as claimed in claim 1 or 3, **characterised in that** the loading aid(s) (208) is/are positioned prior to the transfer thereof into the shelf compartment (209) with a rear side wall in transfer direction (210) against the stop device (243 to 247; 296 to 298) of the transport device (207; 290) in transfer direction (210).

5. Transport device (207; 290) for positioning loading aids (208) prior to their transfer into a shelf compartment (209) on storage spaces (211a to 211d) arranged behind one another for performing the method as claimed in one of claims 1 to 4, which transport device (207; 290) in transfer direction (210) comprises a first and second stop device (243 to 247; 296 to 298) and between the latter a third stop device (243 to 247; 296 to 298), **characterised in that** the transport device (207; 290) comprises in addition a separating device (256, 257; 299) disposed between the first and second stop device (243 to 247; 296 to 298) which has retaining element (278) which can be moved into a separating position between the closely adjacent loading aids (208) in order to separate the closely adjacent loading aids (208).

6. Transport device as claimed in claim 5, **characterised in that** the separating device (256, 257; 299) comprises a retaining element (278) which can be displaced by means of an adjusting drive (259) between a basic position underneath a conveying plane (258) and a separating position projecting from the conveying plane (258).

7. Transport device as claimed in claim 5, **characterised in that** the transport device (207; 290) comprises parallel extendable telescopic arms (213a, 213b; 292a, 292b), which are provided respectively with the stop devices (243 to 247; 296 to 298), whereby the stop devices (243 to 247; 296 to 298) of the two telescopic arms (213a, 213b; 292a, 292b) lie opposite one another and are displaceable in the direction of the opposite stop devices (243 to 247; 296 to 298).

8. Transport device as claimed in claim 7, **characterised in that** the telescopic arms (213a, 213b; 292a, 292b) are mounted on the conveying unit (4) so that they can be moved relative to one another by means of an adjusting drive at right angles to its longitudinal extension.

9. Transport device as claimed in claim 5, **characterised in that** the transport device (207; 290) comprises a conveying device (214a, 214b; 293), in particular a two track conveyor and a length (287) of the conveying device (214a, 214b; 293) is greater than a longitudinal distance (288) between the stop devices (243 to 247; 296 to 298) arranged behind one another and forms a conveying plane (258) accommodating at least two loading aids (208).

## Revendications

1. Procédé pour le positionnement de moyens auxiliaires de chargement (208) avant leur transfert dans un dispositif à rayonnages (209) sur des emplacements de dépôt (211a à 211d) disposés les uns derrière les autres comprenant un dispositif de transport (207; 290), les moyens auxiliaires de chargement (208) étant disposés les uns à côté des autres, les uns derrière des autres, contre un premier, dans le sens de transfert (210), du dispositif de butée (243 à 247; 296 à 298) du dispositif de transport (207; 290), un dispositif de séparation (256, 257; 299) étant déplacé dans la course de déplacement (251) entre les moyens auxiliaires de chargement (208) et le moyen auxiliaire de chargement (208) avant dans le sens de transfert (210) étant positionné contre le dispositif de séparation (256, 257; 299) et le moyen auxiliaire de chargement (208) arrière dans le sens de transfert (210) contre un second, dans le sens de transfert (210), dispositif de butée (243 à 247; 296 à 298) du dispositif de transport (207; 290), après quoi un troisième dispositif de butée (243 à 247; 296 à 298) est déplacé entre les moyens auxiliaires de chargement (208) séparés.

2. Procédé selon la revendication 1, **caractérisé en ce que** les moyens auxiliaires de chargement (208) sont positionnés avant le transfert imminent dans le dispositif à rayonnages (209), à partir d'un dispositif d'orientation (255) du dispositif de transport (207; 290) parallèlement au sens de transfert (210).

3. Procédé selon la revendication 1 ou 2, **caractérisé en ce que** les moyens auxiliaires de chargement (208) sont séparés en groupes de moyens auxiliaires de chargement (208) disposés très près les uns des autres et chacun des groupes est positionné contre des dispositifs de butée (243 à 247; 296 à 298) disposés à distance dans le sens de transfert (210), du dispositif de transport (207; 290), un dispositif de séparation (256, 257; 299) est déplacé ensuite par groupe dans la course de déplacement (251) entre les moyens auxiliaires de chargement (208) et à chaque fois le moyen auxiliaire de chargement (208) positionné contre les dispositifs de butée (243 à 247; 296 à 298) est positionné contre le dispositif de séparation correspondant (256, 257; 299) et les moyens auxiliaires de chargement (208) situés à proximité sont positionnés contre un troisième dispositif de butée (243 à 247; 296 à 298) du dispositif de transport (207; 290), après quoi des dispositifs de butée (243 à 247; 296 à 298) sont déplacés respectivement entre les moyens auxiliaires de chargement (208) séparés.

4. Procédé selon la revendication 1 ou 3, **caractérisé en ce que** le/les moyens auxiliaires de chargement (208) est/sont positionné(s) avant leur transfert imminent dans le dispositif à rayonnages (209) avec une paroi latérale, arrière dans le sens du transfert (210), contre le dispositif de butée (243 à 247; 296 à 298) du dispositif de transport (207; 290) dans le sens de transfert (210).

5. Dispositif de transport (207; 290) pour le positionnement de moyens auxiliaires de chargement (208) avant son transfert dans un dispositif à rayonnage (209) sur des emplacements de stockage (211a à 211d) disposés les uns derrière les autres pour la mise en oeuvre du procédé selon l'une des revendications 1 à 4, lequel dispositif de transport (207; 290) comprend dans le sens de transfert (210) un premier et un second dispositifs de butée (243 à 247; 296 à 298) et un troisième dispositif de butée (243 à 247; 296 à 298) entre ces dispositifs, **caractérisé en ce que** le dispositif de transport (207; 290) présente en supplément un dispositif de séparation disposé entre le premier et le second dispositifs de butée (243 à 274; 296 à 298), lequel dispositif de séparation forme pour la séparation de moyens auxiliaires de chargement (208) contigus les uns aux autres un élément de retenue (278) pouvant être déplacé dans une position de séparation entre les moyens auxiliaires de chargement (208) contigus les uns aux autres.

6. Dispositif de transport selon la revendication 5, **caractérisé en ce que** le dispositif de séparation (256, 257; 299) présente un élément de retenue (278) réglable au moyen de l'entraînement de positionnement (259) entre une position de base située au-dessous d'un plan de transport (258) et une position de séparation dépassant du plan de transport (258).

7. Dispositif de transport selon la revendication 5, **caractérisé en ce que** le dispositif de transport (207; 290) présente des bras télescopiques (213a, 213b; 292a, 292b) déployables en parallèle, qui sont dotés chacun des dispositifs de butée (243 à 247; 296 à 298), les dispositifs de butée (243 à 247; 296 à 298) des deux bras télescopiques (213a, 213b; 292a, 292b) se faisant face et étant réglables respectivement en direction des dispositifs de butée (243 à 247; 296 à 298) opposés.

8. Dispositif de transport selon la revendication 7, **caractérisé en ce que** les bras télescopiques (213a, 213b; 292a, 292b) sont montés sur l'unité de transport (4) de façon à pouvoir être déplacés les uns par rapport aux autres au moyen d'un entraînement de positionnement transversalement à son extension longitudinale.

9. Dispositif de transport selon la revendication 5, **caractérisé en ce que** le dispositif de transport (207; 290) comprend un dispositif de transport (214a, 214b; 293), en particulier un transporteur à deux voies, et une longueur (287) du dispositif de transport (214a, 214b; 293) est supérieure à un espacement longitudinal (288) entre les dispositifs de butée (243 à 247; 296 à 298) disposés les uns derrière les autres et forme un plan de transport (258) recevant au moins deux moyens auxiliaires de chargement (208).
